# EUROPÄISCHE PATENTSCHRIFT

(11) **EP 2 828 612 B1**
(45) Veröffentlichungstag und Bekanntmachung des Hinweises auf die Patenterteilung: **22.04.2020**
(21) Anmeldenummer: 13712147.1
(22) Anmeldetag: 21.03.2013
(51) Int. Cl.: G01B 9/02

(54) **VERFAHREN ZUR REDUKTION DER DIMENSIONALITÄT EINES VON DEN OPTISCHEN EIGENSCHAFTEN EINER PROBE ABGELEITETEN RÄUMLICH REGISTRIERTEN SIGNALS UND VORRICHTUNG HIERZU**
METHOD FOR REDUCING THE DIMENSIONALITY OF A SPATIALLY REGISTERED SIGNAL DERIVED FROM THE OPTICAL PROPERTIES OF A SAMPLE, AND DEVICE THEREFOR
PROCÉDURE DE RÉDUCTION DE LA DIMENSIONNALITÉ D'UN SIGNAL ENREGISTRÉ SPATIALEMENT DÉDUIT DES PROPRIÉTÉS OPTIQUES D'UN ÉCHANTILLON ET DISPOSITIF ASSOCIÉ

(30) Priorität: 21.03.2012 DE 102012102424
(43) Veröffentlichungstag der Anmeldung: 28.01.2015
(73) Patentinhaber: Ludwig-Maximilians-Universität München, 80539 München (DE)
(72) Erfinder: HUBER, Robert, Alexander, 23560 Lübeck (DE); KLEIN, Thomas, 80335 München (DE); WIESER, Wolfgang, 80687 München (DE)
(74) Vertreter: Lucke, Andreas
(86) Internationale Anmeldenummer: PCT/EP2013/000866
(87) Internationale Veröffentlichungsnummer: WO 2013/139481

(56) Entgegenhaltungen:
- WO-A1-2006/058735
- BIEDERMANN B R ET AL: "Real time en face Fourier-domain optical coherence tomography with direct hardware frequency demodulation", OPTICS LETTERS, OSA, OPTICAL SOCIETY OF AMERICA, WASHINGTON, DC, US, Bd. 33, Nr. 21, 1. November 2008 (2008-11-01), Seiten 2556-2558, XP001519571, ISSN: 0146-9592, DOI: 10.1364/OL.33.002556
- YOSHIAKI YASUNO ET AL: "In vivo high-contrast imaging of deep posterior eye by 1-um swept source optical coherence tomography and scattering optical coherence angiography", OPTICS EXPRESS, Bd. 15, Nr. 10, 1. Januar 2007 (2007-01-01), Seite 6121, XP55068473, ISSN: 1094-4087, DOI: 10.1364/OE.15.006121
- PODOLEANU A GH ET AL: "Combinations of techniques in imaging the retina with high resolution", PROGRESS IN RETINAL AND EYE RESEARCH, OXFORD, GB, Bd. 27, Nr. 4, 1. Juli 2008 (2008-07-01), Seiten 464-499, XP023611418, ISSN: 1350-9462, DOI: 10.1016/J.PRETEYERES.2008.03.002 [gefunden am 2008-03-28]

## Beschreibung

Es wird ein Verfahren zur Reduktion der Dimensionalität eines von den optischen Eigenschaften einer Probe abgeleiteten räumlich registrierten Signals sowie eine Vorrichtung hierzu angegeben.

Die Druckschrift US 2011/0273667 A1 betrifft eine Vorrichtung zur optischen Kohärenztomografie zur anatomischen Bildgebung.

Ein Verfahren nach dem Oberbegriff des Anspruchs 1 ist aus Biedermann et al., "Real time en face Fourier-domain optical coherence tomography with direct hardware frequency demodulation", Optics Letters, OSA, Optical Society ofAmerica, Washington, DC, US, Bd. 33, Nr. 21, 1. November 2008, Seiten 2556-2558 bekannt. Darin wird eine Vorrichtung beschrieben, die es gestattet, ein einzelnes Frequenzband aus einem OCT-Interferenzsignal zu extrahieren. Für diesen Zweck wird eine durchstimmbare Lichtquelle verwendet, bei der der Verlauf der Frequenz über der Zeit hoch-linear ist. Zum Extrahieren einer bestimmten Frequenz, die einer bestimmten Tiefe entspricht, wird das OCT-Interferenzsignal mit einer Referenzfrequenz eines Lokaloszillators gemischt, und durch das Einstellen der Frequenz des Lokaloszillators kann die erwünschte Tiefe ausgewählt werden. Anstatt also, wie bei OCT üblich, ein volles Spektrum aufzunehmen und dann Fourier zu transformieren, gestattet es der Aufbau dieser Schrift, mithilfe des Lokaloszillators eine einzelne Fourierkomponente des interferometerbasierten Detektionssignals auszuwählen.

Yoshiaki Ysuno et al., "In vivo high-contrast imaging of deep posterior eye by 1-um swept source optical coherence tomography and scattering optical coherence angiography", Optics Express, Bd. 15, Nr. 10, 1. Januar 2007, Seite 6121*,* beschreibt ein Verfahren zur interferometerbasierten OCT-Bildgebung. Gemäß diesem Verfahren wird ein spektrales Signal mit einer Samplefrequenz von 100 Megasamples pro Sekunde und 2048 Samplepunkten gesampelt. Diese Sampling-Konfiguration repräsentiert eine maximale Tiefenmessung von 9,4 mm. Das digitalisierte Spektrum wird zunächst mit einem speziellen Filter geformt, in einen Wellenzahlraum reskaliert, mit einer wellenlängenabhängigen anti-dispersiven Phase multipliziert, um eine verbleibende Dispersion auszugleichen, und dann numerisch Fourier-transformiert, um ein OCT Bild zu erhalten. Das auf diese Weise erhaltene OCT-Bild ist somit ein 3-D Bild der Probe, wobei die Tiefeninformation in der Frequenz des gesampelten Signals codiert ist.

Ein weiteres verwandtes Verfahren ist in der WO 2006/058735 A1 offenbart.

Eine zu lösende Aufgabe besteht darin, ein Verfahren sowie eine Vorrichtung anzugeben, mit der effizient ein zweidimensionales Abbild einer dreidimensionalen Probe erstellt werden kann.
Diese Aufgabe wird gelöst durch das Verfahren sowie durch die Vorrichtung gemäß der unabhängigen Patentansprüche. Weiterbildungen sind in den abhängigen Patentansprüchen angegeben.

Ein konkretes Beispiel für die Anwendung eines solchen Verfahrens ist die hochsensitive Erstellung eines zweidimensionalen Bildes einer interferometrisch dreidimensional erfassten Probe. Eine dreidimensional erfasste Probe ist zum Beispiel biologisches Gewebe, welches mittels optischer Kohärenztomographie abgetastet wurde. Die Reduktion der Dimensionalität wäre in diesem Beispiel die Erzeugung eines 2-dimensionalen en-face Bildes dieser Probe.

Allgemein bezeichnet die Reduktion der Dimensionalität eines von den optischen Eigenschaften einer Probe abgeleiteten räumlich registrierten Signals folgenden Ablauf: eine Eigenschaft (wie beispielsweise ein Streuvermögen), die durch eine n-dimensionale Matrix darstellbar ist (wie beispielsweise eine NxMxL Matrix in drei Dimensionen), wird auf eine kleinere Menge von Signalwerten oder Datenwerten reduziert, welche meist durch eine Matrix niedrigerer Dimension (wie beispielsweise eine N'xM' zweidimensionale Matrix) repräsentiert werden kann.
Das hier beschriebene Verfahren zeichnet sich besonders durch hohe Effizienz und Geschwindigkeit aus. So kann es zum Beispiel gemäß zumindest einer Ausführungsform das Durchführen einer Fourier-Transformation überflüssig machen.

Gemäß zumindest einer Ausführungsform ist das Verfahren zum Erstellen eines zweidimensionalen Bildes einer dreidimensionalen Probe eingerichtet. Zweidimensionales Bild bedeutet insbesondere, dass es sich bei dem Bild um eine Draufsicht auf die Probe handelt, das heißt, dass es keine oder im Wesentlichen keine Tiefeninformation enthält. Ein solches Bild wird auch als en face-Bild bezeichnet. Der Begriff dreidimensionale Probe kann bedeuten, dass die Probe ein zu messendes Tiefenprofil aufweist, insbesondere entlang einer Richtung senkrecht zu den Hauptrichtungen des zweidimensionalen Bildes.

Das von der Methode erstellte Bild stellt bevorzugt die Stärke des von der Probe zurückgestreuten Lichts dar. Gemäß zumindest einer Ausführungsform wird die rückgestreute Stärke des Lichts in Helligkeitswerten oder Graustufenwerten dargestellt. Genauso möglich ist aber eine andere Darstellung wie Falschfarbencodierung, variable Transparenz. Fortan wird auch für alle codierten Formen von rückgestreuter Intensität exemplarisch von Helligkeitswert gesprochen.

Der Begriff Helligkeitswert kann sich, je nach Realisierung des Aufbaus, sowohl auf eine Eigenschaft des auf einem Ausgabegerät darstellbaren visuellen Eindrucks beziehen, oder aber auch auf eine bevorzugt räumlich variable optische Eigenschaft der Probe. Insbesondere ist eine solche Probeneigenschaft die Stärke des Rückstreusignals.

Je nach Anwendung bezieht sich der Ausdruck Helligkeitswert auf verschiedene Größen entlang des Signalpfades ab der Probe:
- die Rückstreustärke der Probe,
- die Stärke des interferometrischen Oszillationssignals wie zum Beispiel eine Fringe-Amplitude,
- ein Signalstärke des elektrischen Signals nach der Detektion mit einem Photodetektor,
- einen numerischen Größenwert eines digitalisierten Signals, und/oder
- eine Farb-Helligkeitsinformation.
Der Begriff Helligkeitswert wird ab hier synonym verwendet.

Ebenso kann die finale Darstellung als Bild weitere Größen, basierend auf einer Pluralität von Rückstreueigenschaften der Probe, von denen zumindest ein Teil nach beschriebenem Verfahren gemessen wurde, mit einbeziehen.

Gemäß zumindest einer Ausführungsform geht in die Berechnung oder Erfassung des beschriebenen verallgemeinerten Helligkeitswertes bevorzugt eine tiefenaufgelöste Information nicht substantiell ein.

Gemäß zumindest einer Ausführungsform geht in die Berechnung oder Erfassung des beschriebenen verallgemeinerten Helligkeitswertes bevorzugt keine volumetrische Information substantiell ein.

Gemäß zumindest einer Ausführungsform geht in die Berechnung oder Erfassung des beschriebenen verallgemeinerten Helligkeitswertes bevorzugt keine z-Information substantiell ein.

Gemäß zumindest einer Ausführungsform geht in die Berechnung oder Erfassung des beschriebenen verallgemeinerten Helligkeitswertes bevorzugt eine tiefenaufgelöste Information mit einer axialen Auflösung von schlechter als 50µm ein.

Gemäß zumindest einer Ausführungsform geht in die Berechnung oder Erfassung des beschriebenen verallgemeinerten Helligkeitswertes bevorzugt eine tiefenaufgelöste Information mit einer axialen Auflösung von schlechter als 2x, bevorzugt 5x, besonders bevorzugt 10x der durch die Lichtquelle physikalisch möglichen axialen Auflösung ein.

Gemäß zumindest einer Ausführungsform umfasst das Verfahren den Schritt des Bereitstellens und/oder des Betreibens einer Lichtquelle. Die Lichtquelle emittiert bevorzugt spektral breitbandig eine Primärstrahlung. Spektral breitbandig kann bedeuten, dass ein Quotient aus einer spektralen Breite und einer Zentralwellenlänge mindestens 0,005 oder mindestens 0,02 oder mindestens 0,06 oder mindestens 0,10 beträgt. Die spektrale Breite ist hierbei insbesondere eine volle Breite bei halber Höhe des Maximums, kurz FWHM. Die Zentralwellenlänge ist insbesondere die Wellenlänge mit der höchsten spektralen Energiedichte. Beispielsweise liegt die Zentralwellenlänge im nahen infraroten Spektralbereich, insbesondere bei ungefähr 800 nm oder bei ungefähr 1050 nm oder bei ungefähr 1300 nm oder bei ungefähr 1550 nm.

Die Abstimmrate oder Wiederholrate ist insbesondere die inverse Zeit, mit der einzelne Wellenlängendurchläufe aufeinanderfolgen. Hier sind insbesondere sehr hohe Raten von Interesse, welche erst seit kurzem verfügbar sind, beispielsweise Raten von mehr als 50 kHz, bevorzugt mehr als 150 kHz, besonders bevorzugt mehr als 500 kHz oder 1 MHz.

Gemäß zumindest einer Ausführungsform umfasst das Verfahren den Schritt des Abrasterns und/oder Abtastens einer Vielzahl von Bildpunkten und/oder Ortspunkten der Probe mit der Primärstrahlung. Die Bildpunkte werden auch als Pixel bezeichnet. Abrastern kann bedeuten, dass die Primärstrahlung beispielsweise mittels eines mikromechanischen, beweglichen Spiegels punktweise über die Probe geführt wird. Die Bildpunkte werden also nicht alle zur selben Zeit sondern zeitlich hintereinander abgerastert. Insbesondere handelt es sich bei dem Abrastern um ein zweidimensionales Abrastern von Spalten und Zeilen aus Bildpunkten/Pixeln.

Gemäß zumindest einer Ausführungsform umfasst das Verfahren den Schritt des Sammelns einer Sekundärstrahlung. Die Sekundärstrahlung ist ein von der Probe zurückgeworfener Teil der Primärstrahlung. Das Sammeln erfolgt insbesondere mit einer Optik, zum Beispiel einer Faseroptik, einer Sammellinse, Spiegeln und/oder einem Mikroskopobjektiv.

Gemäß zumindest einer Ausführungsform des Verfahrens wird die Sekundärstrahlung zeitlich wellenlängenaufgelöst detektiert. Zeitlich wellenlängenaufgelöst kann bedeuten, dass die verschiedenen Wellenlängen zeitlich aufeinander folgen, was in der vorliegenden Erfindung durch eine wellenlängenabstimmbare Lichtquelle realisiert wird.

Gemäß zumindest einer Ausführungsform wird die Sekundärstrahlung für jeden einzelnen Bildpunkt detektiert. Es wird dann bevorzugt nicht über mehrere der Bildpunkte gemittelt, sondern die Information sowie die Sekundärstrahlung von jedem der einzelnen Bildpunkte wird separat ausgewertet. Für jeden der Bildpunkte wird dann bevorzugt ein Detektionssignal mit einer Detektionseinheit erzeugt. Das Detektionssignal ist interferometerbasiert, bezieht sich also insbesondere auf ein Inferferenzsignal, an dem die Sekundärstrahlung beteiligt ist.

Gemäß zumindest einer Ausführungsform wird für jeden der Bildpunkte oder für eine Vielzahl von Gegenstandsbereichen und/oder Probengebieten mit je einem oder mehreren der Bildpunkte aus dem zugehörigen Detektionssignal ein Helligkeitswert bestimmt. Zur Bestimmung des Helligkeitswerts für einen Gegenstandsbereich kann über mehrere der Bildpunkte gemittelt werden. Der Gegenstandsbereich ist zum Beispiel wie eine Kreisfläche oder wie eine Rechteckfläche geformt, kann aber ebenso kreisringförmig sein.

Der Begriff Helligkeitswert bezieht sich insbesondere auf die Intensität, Stärke und/oder Helligkeit der detektierten Sekundärstrahlung. Bei dem Helligkeitswert kann es sich beispielsweise um eine 8-Bit-Graustufencodierung handeln und/oder um eine Farbcodierung. Die Codierung kann gewichtet erfolgen, zum Beispiel durch eine nichtlineare Kompression, wie z. B. ein Logarithmieren.

Gemäß zumindest einer Ausführungsform ist das Bestimmen der Helligkeitswerte aus den Detektionssignalen frei von einer Integraltransformation oder frei von einer Fourier-Transformation oder frei von einer Aufsummierung aller Werte des Ergebnisses einer Fourier-Transformation. Der Begriff Fourier-Transformation schließt insbesondere ein: Fast-Fourier-Transformation, kurz FFT, Non-uniform FFT, kurz NU-FFT, diskrete Kosinustransformation, kurz DCT. Bei der Bestimmung der Helligkeitswerte werden insbesondere nur vergleichsweise einfache mathematische Operationen wie ein Aufsummieren, ein Aufsummieren von Beträgen oder Quadraten oder eine Mittelwertbildung und/oder eine spektrale Filterung zum Beispiel mit einem FIR-Filter herangezogen.

Gemäß zumindest einer Ausführungsform wird die beschriebene Datenprozessierung kombiniert mit weiteren Schritten der Datenaufbereitung, bevorzugt Verfahren, wie sie in der optischen Kohärenztomographie zum Einsatz kommen.

Gemäß zumindest einer Ausführungsform wird die beschriebene Datenprozessierung kombiniert mit der Verarbeitung weiterer Daten.

Gemäß zumindest einer Ausführungsform wird die beschriebene Datenprozessierung nur auf einer oder mehrerer Untermengen durchgeführt.

In mindestens einer Ausführungsform des Verfahrens ist dieses zum Erstellen eines zweidimensionalen Bildes einer dreidimensionalen Probe eingerichtet. Das Verfahren der Erfindung ist ein Anspruch 1 definiert.

Insbesondere bei Systemen für die optische Kohärenztomografie, kurz OCT, werden dreidimensionale Ansichten von Objekten erstellt. Zur Justage des OCT-Systems sowie zum besseren Vergleich mit herkömmlichen, zweidimensionalen Abbildungsverfahren ist es erwünscht, ein zweidimensionales Bild, auch als en face-Ansicht bezeichnet, zu erstellen. Eine Möglichkeit, dies zu erreichen, besteht darin, dem OCT-System ein bildgebendes Laser-Ophthalmoskop, englisch: scanning laser ophthalmoscope, kurz SLO, beizufügen. Ein solches SLO weist jedoch eine eigene Laserlichtquelle sowie einen separaten Detektor, insbesondere in Form einer Lawinen-Fotodiode, englisch avalanche diode, auf. Solche separaten SLO sind aber vergleichsweise teuer und erfordern einen zusätzlichen Justage-Aufwand.

Eine weitere Möglichkeit besteht darin, aus den dreidimensionalen Daten des OCT-Systems das en face-Bild zu generieren. Hierzu sind jedoch rechenzeitaufwändige Operationen, insbesondere Fourier-Transformationen, für jeden einzelnen Bildpunkt erforderlich. Bei den hohen erforderlichen Datenraten, um insbesondere mehrere en face-Bilder pro Sekunde, etwa für eine Justage des OCT-Systems, zu erzeugen, sind dann jedoch sehr große Rechenkapazitäten erforderlich. Eine solche Methode ist in der Druckschrift US 5,644,642 A beschrieben.

Bei dem hier beschriebenen Verfahren sind zur Erstellung des en face-Bildes bevorzugt Komponenten des OCT-Systems selbst nutzbar und es sind nur vergleichsweise geringe Rechenkapazitäten erforderlich und ein Justageaufwand ist reduziert. Das hier beschriebene Verfahren kann auch für sogenannte Full-Field-OCTs angewendet werden.

Erfindungsgemäß dient das Verfahren zur Reduktion der Dimensionalität eines von den optischen Eigenschaften der Probe abgeleiteten räumlich registrierten Signals. Zum Beispiel zu einer Einstellung eines Verstärkungsfaktors für eine OCT-Anwendung ist es möglich, dass das Signal der Probe zeilenweise gemittelt wird. Aus dem Signal der Probe kann hierzu, vor oder insbesondere auch nach dem Einstellen des Verstärkungsfaktors, dann das zweidimensionale Bild erstellt werden.

In mindestens einer Ausführungsform beruht das Bestimmen der Helligkeitswerte nicht substantiell auf der Aufsummierung der einzelnen Signalamplituden des Ergebnisses einer Fourier-Transformation. Nicht substantiell bedeutet zum Beispiel, dass das Ergebnis einer Fourier-Transformation nur zu höchstens 2 % oder zu höchstens 10 % zu dem Helligkeitswert beiträgt.

In mindestens einer Ausführungsform beruht das Bestimmen der Helligkeitswerte auf einem AC-Anteil des Interferenzsignals, das in der Zeitdomäne aufgenommen wird.

Erfindungsgemäß werden die Helligkeitswerte aus einer Intensität und/oder einer Stärke und/oder einem Radiofrequenz-Leistungsanteil des Detektionssignals für die einzelnen Bildpunkte und/oder Gegenstandsbereiche bestimmt. Der Radiofrequenz-Leistungsanteil wird hierbei in einem Frequenzbereich von einschließlich 3 kHz bis 30 GHz oder von einschließlich 300 kHz bis 10 GHz oder in einem oder mehreren Frequenz-Teilbereichen hieraus bestimmt. Mit anderen Worten wird ein Hochfrequenz-Leistungsanteil des Detektionssignals gemessen.

Alternativ zum Leistungs- oder RMS-Wert kann auch ein leistungsähnliches Signal gemessen werden, wie beispielsweise eine mittlere Amplitude, RMS-Quadrat, Summe der Beträge oder andere mathematische Normen. Ferner kann das gemessene Signal noch nichtlinear komprimiert werden, beispielsweise logarithmiert. Im Weiteren wird synonym nur noch von Radiofrequenz-"Leistung" gesprochen.

Gemäß einer Ausführungsform handelt es sich bei dem Detektionssignal insbesondere um ein Interferenzsignal aus der Sekundärstrahlung mit einer Referenzstrahlung, wobei die Referenzstrahlung ein Teil der Primärstrahlung ist, der nicht zu der Probe gelenkt ist.

Ein solches Interferenzsignal weist eine Vielzahl von Interferenzmaxima und Interferenzminima auf, auch als Interferenzmuster oder englisch als fringes bezeichnet. Der Radiofrequenz-Leistungsanteil bezieht sich bevorzugt auf Frequenzen in dem beobachteten Interferenzmuster des Detektionssignals.

Gemäß zumindest einer Ausführungsform des Verfahrens umfasst die Detektionseinheit einen oder mehrere Strahlungsdetektoren zur Detektion der Sekundärstrahlung und zum Erzeugen des Detektionssignals. Der Radiofrequenz-Leistungsanteil wird aus dem Detektionssignal erfindungsgemäß unmittelbar über eine Analog-Messung bestimmt.

Das Detektionssignal kann ein optisches Signal, insbesondere unmittelbar nach einem Interferometer, sein, aus dem dann ein elektronisches Signal erzeugt wird. In der Detektionseinheit wird beispielsweise zunächst ein analoges, elektronisches Signal erzeugt, etwa mit einer Fotodiode. Nachfolgend kann aus dem analogen Signal ein digitales Signal erzeugt werden.

Gemäß zumindest einer Ausführungsform wird die Lichtquelle mit einer Wiederholrate von mindestens 3 kHz oder von mindestens 99 kHz oder von mindestens 199 kHz oder von mindestens 765 kHz insbesondere durchgestimmt. Das kann bedeuten, dass sich eine Wellenlänge der Primärstrahlung mit der angegebenen Wiederholrate periodisch ändert. Solche Lichtquellen werden auch als swept source bezeichnet.
Gemäß zumindest einer Ausführungsform bleiben bei der Bestimmung der Helligkeitswerte solche Frequenzen unberücksichtigt oder werden unterdrückt, die unterhalb der Wiederholrate oder unterhalb einem Dreifachen oder unterhalb einem Zehnfachen oder unterhalb einem Fünfzigfachen der Wiederholrate liegen. Mit anderen Worten erfolgt dann eine Hochpassfilterung der Detektionssignale.

Gemäß zumindest einer Ausführungsform umfasst das Verfahren den Schritt des Aufnehmens eines dreidimensionalen Bildes der Probe. Dies kann insbesondere bedeuten, dass eine Tiefeninformation der Probe interferometrisch gemessen wird.

Gemäß zumindest einer Ausführungsform weist die Primärstrahlung eine maximale Kohärenzlänge auf, im bestimmungsgemäßen Betrieb der Lichtquelle. Die maximale Kohärenzlänge wird insbesondere zum Aufnehmen des dreidimensionalen Bildes der Probe eingestellt. Alternativ ist es auch möglich, die Kohärenzlänge zum Aufnehmen des dreidimensionalen Bildes zu reduzieren, etwa um eine Schleierbildung zu unterdrücken.

Gemäß zumindest einer Ausführungsform wird bei der Detektion der Sekundärstrahlung für mindestens einen Teil der Bildpunkte die Lichtquelle derart verstimmt, dass für diese Bildpunkte die Kohärenzlänge der Primärstrahlung kleiner wird als die maximale Kohärenzlänge, beispielsweise um mindestens einen Faktor 1,5 oder um mindestens einen Faktor 2. Mit anderen Worten wird die Lichtquelle zur Detektion des en face-Bildes gezielt verstimmt.

Gemäß zumindest einer Ausführungsform ist ein Weglängenunterschied zwischen der Sekundärstrahlung und der Referenzstrahlung größer als die maximale Kohärenzlänge der Primärstrahlung, mindestens bei der Aufnahme eines Teils oder aller Bildpunkte des en face-Bildes. Mit anderen Worten kann sich die Probe weiter von einem optischen Ausgang einer für das Verfahren eingerichteten Vorrichtung entfernt befinden, als über eine Einstellung einer optischen Weglänge der Referenzstrahlung ausgleichbar ist.

Gemäß zumindest einer Ausführungsform wird das Detektionssignal zum Erstellen eines dreidimensionalen Bildes der Probe abgegriffen. Der Begriff "Abgreifen" weist darauf hin, dass das Detektionssignal sowohl zu der Detektionseinheit für das zweidimensionale Bild als auch zu einer Recheneinheit zum Erzeugen des dreidimensionalen Bildes gelangen kann. Mit anderen Worten können die Detektionseinheit und die Recheneinheit elektrisch parallel mit dem Detektionssignal versorgt werden.

Gemäß zumindest einer Ausführungsform wird das Detektionssignal zum Erstellen des dreidimensionalen Bildes für jeden der Bildpunkte einer Integraltransformation, insbesondere einer Fourier-Transformation, unterzogen. Insbesondere das Interferenzmuster aus der Sekundärstrahlung und der Referenzstrahlung wird also Fourier-transformiert, für jeden einzelnen der Bildpunkte oder mindestens für einen Teil der Bildpunkte, wobei mittels der Fourier-Transformation Tiefenschnitte erstellt werden können.

Gemäß zumindest einer Ausführungsform basiert ein Hauptbildeindruck des zweidimensionalen Bildes nicht oder nicht substantiell auf einer Operation und/oder Verarbeitung des dreidimensionalen Bildes und/oder der dem dreidimensionalen Bild zugrunde liegenden Daten.

Es wird verstanden, dass es sich bei den dem zugrunde liegenden Daten auch um Daten handeln kann, welche sich im Prinzip für eine Erstellung eines 3-dimensionalen Bildes eignen würden, unabhängig davon ob und/oder wann ein solche Operation tatsächlich erfolgt. Bevorzugt bedeutet das, dass das hier beschriebene Verfahren auf nichttransformierten Daten oder Signalen operiert.

Gemäß zumindest einer Ausführungsform basiert der Hauptbildeindruck nicht oder nicht substantiell auf einer trivialen Integraltransformation.

Gemäß zumindest einer Ausführungsform gehen AC-Anteile der Stärke des Detektionssignals in einem spektral oszillatorischen Bereich bei Frequenzen von 2000/THz bis 0,02/THz insbesondere maßgeblich zur Bestimmung der Helligkeitswerte mit ein.

Gemäß zumindest einer Ausführungsform wird die Referenzstrahlung des Interferometers während des Messvorgangs vorübergehend um mehr als einen Faktor 10 abgeschwächt oder geblockt. Alternativ oder zusätzlich ändert die Lichtquelle während des Messvorgangs vorübergehend ihre Ausstrahlcharakteristik, insbesondere substantiell.

Gemäß zumindest einer Ausführungsform ist eine solche Änderung der Ausstrahlcharakteristik die Änderung des Wellenlängen-Abstimmbereiches, die Änderung der Ausgangsleistung, die Änderung der Kohärenzeigenschaften, die Änderung der Zentralwellenlängen, die Änderung des zeitlichen Leistungsverlaufs und/oder Änderungen, die durch Abschalten von aktiven optischen Elementen der Quelle verursacht werden.

Gemäß zumindest einer Ausführungsform wird vor oder nach der Detektion der Sekundärstrahlung und dem Erzeugen des interferometerbasierten Dektektionssignals ein digitaler Filter verwendet. Alternativ oder zusätzlich wird vor oder nach der Detektion der Sekundärstrahlung und dem Erzeugen des interferometerbasierten Dektektionssignals ein elektronischer, analoger Filter verwendet.

Gemäß zumindest einer Ausführungsform wird eine Kombination aus filternder Anordnung und digitaler Spektral-Detektion verwendet.

Gemäß zumindest einer Ausführungsform wird vor oder nach der Detektion der Sekundärstrahlung und dem Erzeugen des interferometerbasierten Dektektionssignals ein Filter mit veränderlicher Transmissionscharakteristik verwendet.

Gemäß zumindest einer Ausführungsform wird vor oder nach der Detektion der Sekundärstrahlung und dem Erzeugen des interferometerbasierten Dektektionssignals die Transmissionscharakteristik eines Filters synchron zu einer Abtastung von Werten, insbesondere in einem Analog-Digital-Wandler an einem Strahlungsdetektor, geändert. Gemäß zumindest einer Ausführungsform beinhaltet die Bestimmung und/oder die graphische Darstellung der Helligkeitswerte die Subtraktion eines Signaluntergrunds, englisch Background. Hierzu kann auch eine Skalierung Verwendung finden.

Gemäß zumindest einer Ausführungsform wird mindestens ein Helligkeitswert zur Steuerung eines elektronischen Verstärkens oder Abschwächens des Detektionssignals verwendet. Alternativ oder zusätzlich wird mindestens ein Helligkeitswert zur Steuerung der optischen interferometrischen Verstärkung oder Abschwächung des Detektionssignals verwendet.

Gemäß zumindest einer Ausführungsform wird eine Signalstärke und/oder eine Intensität insbesondere der Sekundärstrahlung zur Steuerung der elektronischen Verstärkung des Detektionssignals verwendet. Speziell wird hierzu die maximale oder die mittlere Signalstärke verwendet. Die Bestimmung der Signalstärke kann bevorzugt durch Messung des Radiofrequenz-Leistungsanteils des Detektionssignals erfolgen. Ein Verstärkungsfaktor kann hierbei synchron detektiert werden.

Darüber hinaus wird eine Vorrichtung zum Erstellen eines zweidimensionalen Bildes einer dreidimensionalen Probe angegeben. Mit der Vorrichtung kann besonders bevorzugt ein Verfahren, wie in einer oder mehrerer der oben genannten Ausführungsformen angegeben, durchgeführt werden. Merkmale der Vorrichtung sind daher auch für das Verfahren offenbart und umgekehrt.

In mindestens einer Ausführungsform umfasst die Vorrichtung eine spektral breitbandig emittierende Lichtquelle, die im Betrieb eine Primärstrahlung emittiert. Weiterhin beinhaltet die Vorrichtung eine Optik zum Sammeln der Sekundärstrahlung sowie eine Detektionseinheit zum zeitlich und/oder räumlich wellenlängenaufgelösten Detektieren der Sekundärstrahlung. Die Vorrichtung umfasst einen Radiofrequenz-Leistungsdetektor.

Gemäß zumindest einer Ausführungsform der Vorrichtung umfasst diese einen Aufbau zur zeitkodierten optischen Kohärenz-Tomografie in der Frequenzdomäne, englisch time encoded frequency domain OCT oder auch swept source OCT. Ein solcher Aufbau ist angegeben in der Druckschrift US 2006/187537 A1.

Gemäß zumindest einer Ausführungsform nutzen die Detektionseinheit und der Aufbau zur OCT den mindestens einen Strahlungsdetektor gemeinsam. Mit anderen Worten ist dann für die Detektionseinheit und für die Erzeugung des en face-Bildes kein zusätzlicher Strahlungsdetektor erforderlich.

Gemäß zumindest einer Ausführungsform der Vorrichtung befindet sich der Strahlungsdetektor der Detektionseinheit an einem offenen, nicht von dem Aufbau zur OCT genutzten Ende eines Interferometers des Aufbaus. Der Strahlungsdetektor der Detektionseinheit ist dann unabhängig von dem Aufbau. Bei dem Strahlungsdetektor kann es sich dann um eine Lawinen-Fotodiode oder um eine herkömmliche Fotodiode handeln. Nachfolgend wird ein hier beschriebenes Verfahren sowie eine hier beschriebene Vorrichtung unter Bezugnahme auf die Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

### KURZE BESCHREIBUNG DER FIGUREN

Es zeigen:
- Figuren 1, und 4 bis 9: schematische Darstellungen von Ausführungsbeispielen von hier beschriebenen Vorrichtungen, und
- Figur 3: ein face-Bilder, erstellt mit Ausführungsbeispielen von hier beschriebenen Vorrichtungen.

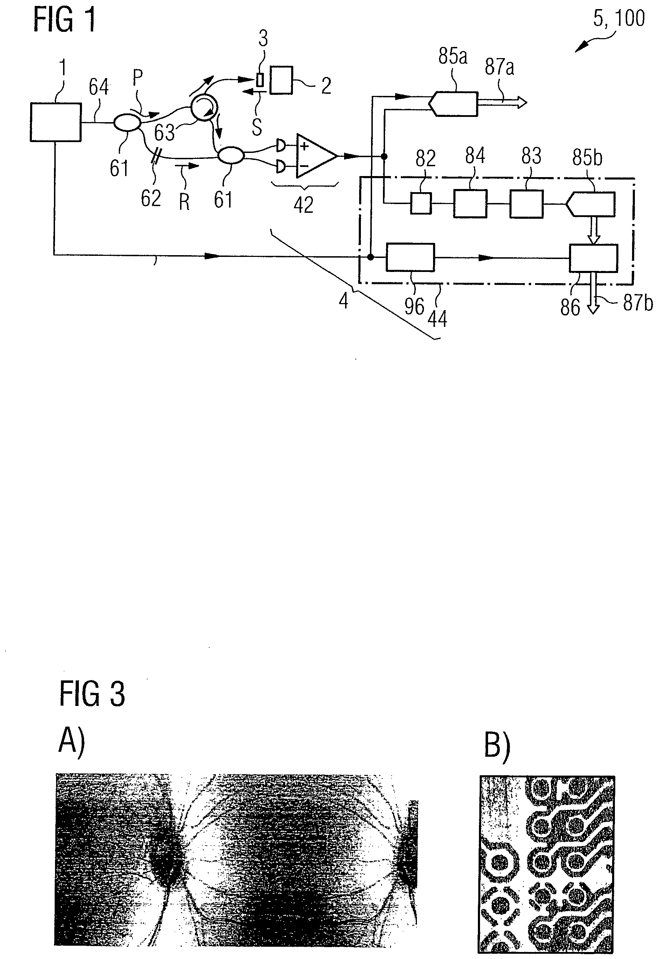

In Figur 1 ist schematisch ein Ausführungsbeispiel einer Vorrichtung 100 zum Erstellen eines zweidimensionalen en face-Bildes einer dreidimensionalen Probe 2 dargestellt. Die Vorrichtung 100 umfasst einen Aufbau 5 zur zeitkodierten optischen Kohärenz-Tomografie in der Frequenzdomäne. Der Aufbau 5 und die Vorrichtung 100 weisen eine gemeinsame wellenlängenabstimmbare Lichtquelle 1 auf. Bei der Lichtquelle 1 kann es sich um eine Lichtquelle handeln, wie in den Druckschriften US 2006/187537 A1, US 2010/0103964 A1, WO 2010/026197 A2 oder WO 2011/033031 A1 angegeben. Neben solchen Lichtquellen können auch andere Lichtquellen wie beispielsweise oberflächenemittierende Laser mit einer vertikalen Kavität, kurz VCSEL, oder MEMS-basierte Lichtquellen Verwendung finden.

Eine Primärstrahlung P, symbolisiert durch Pfeile, wird in optischen Fasern 64 in einem Strahlteiler 61 aufgeteilt. Ein Teil der Primärstrahlung P gelangt über einen optischen Zirkulator 63 zu einer Optik 3 und auf eine Probe 2. Eine von der Probe 2 zurückgeworfene Sekundärstrahlung S, die Teil der Primärstrahlung P ist, wird von der Optik 3 gesammelt und über den Zirkulator 63 zu einem weiteren Strahlteiler 61 geführt. In dem Strahlteiler 61 interferiert die Sekundärstrahlung S mit der Referenzstrahlung R. In einem Referenzarm befindet sich eine optische Verzögerungsstrecke 62 zum Weglängenausgleich eines optischen Wegs der Sekundärstrahlung S und der Referenzstrahlung R. Eine Detektion eines Interferenzmusters, englisch fringes, erfolgt in einem Strahlungsdetektor 42, der zwei Fotodioden sowie einen differenziellen Operationsverstärker aufweist.

Das von dem Strahlungsdetektor 42 ausgegebene Signal, symbolisiert durch gerade Pfeil-Linien, wird zu einem schnellen Analog-Digital-Wandler 85a, kurz ADC, geleitet. Der ADC 85a ist für Datenraten im Bereich von Gigasamples pro Sekunde ausgelegt und vergleichsweise teuer. Der ADC 85a gibt an einem Datenausgang 87a ein Signal aus, über das insbesondere mittels Fourier-Transformation ein dreidimensionales Abbild der Probe 2 erstellbar ist.

Zur Erstellung des zweidimensionalen en face-Bildes umfasst die Vorrichtung 100 einen Radiofrequenz-Leistungsdetektor 44, eingerahmt mir einer Strich-Punkt-Linie. Zwischen einem Hochpassfilter 82 und einem Tiefpassfilter 83 befindet sich ein Leistungsdetektorelement 84 zur Bestimmung eines Radiofrequenz-Leistungsanteils des Detektorsignals des Strahlungsdetektors 42. Insbesondere kann der Hochpassfilter 82 zur Vermeidung von Reflexionen aus sehr geringen OCT-Tiefen verwendet werden. Ebenso kann der Hochpassfilter 82 eine Untergrundsubtraktion, englisch Background subtraction, ersetzen. Bei dem Leistungsdetektorelement 84 handelt es sich zum Beispiel um einen AD8318 des Herstellers Analog Devices, Inc., der insbesondere zur logarithmischen Bestimmung von Leistungen von Hochfrequenzsignalen im Bereich von 1 MHz bis 8 GHz eingerichtet ist. Sowohl der Hochpassfilter 82 als auch der Tiefpassfilter 83 und das Leistungsdetektorelement 84 sind realisiert unter Zuhilfenahme eines AD8318, bei dem es sich um ein sehr kostengünstiges Bauteil handelt.

Diesen Bauteilen ist ein vergleichsweise langsam arbeitender Analog-Digital-Wandler 85b nachgeordnet, der kostengünstig ist und für Datenraten von ungefähr 10 Megasamples pro Sekunde bis 50 Megasamples pro Sekunde eingerichtet ist. Dem ADC 85b ist eine programmierbare Logik 86, kurz FPGA, nachgeordnet, zum Beispiel realisiert durch ein Bauteil XC6SLX9.

Mit der Vorrichtung 100 und dem Aufbau 5 ist es möglich, mit derselben Lichtquelle 1 über dieselbe Optik 3 und über denselben zweidimensionalen Scanner sowohl das en face-Bild als auch das dreidimensionale Abbild der Probe zu erstellen, synchron zueinander.

Die Abstimmrate der Lichtquelle 1 liegt hierbei zum Beispiel zwischen 250 kHz und 500 kHz. Bei einer Bildauflösung von beispielsweise 500 Bildpunkten x 500 Bildpunkte sind so mehrere Ansichten pro Sekunde, englisch frames per second, anzeigbar. Die Aufnahme des en face-Bildes sowie die Aufnahme der dreidimensionalen Datensätze ist gleichzeitig möglich.

Es ist eine Tiefeninformation der Probe 3 in der Frequenz und eine Stärke der Rückstreuung in der Amplitude des Signals des Strahlungsdetektors 42 kodiert. Die Frequenz ist für die en face-Abbildung somit uninteressant. Die rückgestreute Intensität ergibt sich im Wesentlichen allein aus der Amplitude. Als Maß für die rückgestreute Intensität eignet sich somit insbesondere der Effektiv- oder RMS-Wert des Signals oder eine Potenz davon, oder auch andere mathematische Normen. Eine technisch einfache Realisierung erfolgt mit Bauteilen wie dem AD8318. Dieses Bauteil liefert insbesondere einen Spannungswert, der umso größer ist, je größer die Hochfrequenzleistung ist und liefert damit ein Maß für die rückgestreute Intensität.

Dieser Spannungswert kann mit dem vergleichsweise langsam arbeitenden Analog-Digital-Wandler 85b abgetastet und direkt in die Helligkeitswerte der dazugehörigen Bildpunkte umgerechnet werden, ohne dass aufwändige Rechenoperationen wie Fourier-Transformationen erforderlich wären. Da die Detektion von einer Heterodyn-Verstärkung in dem Interferometer des Aufbaus 5 zur OCT profitiert, sind keine besonders empfindlichen Dioden wie Lawinen-Fotodioden erforderlich. Somit kann das Signal auch für das en face-Bild unmittelbar an dem Strahlungsdetektor 42 abgegriffen werden, wie auch das Signal für das dreidimensionale Bild. Insbesondere das Bauteil AD8318 bietet eine Analog-Bandbreite von zirka 8 GHz, was für OCT-Systeme mit Scan-Geschwindigkeiten bis in den MHz-Bereich ausreichend ist. Eine reale Bandbreite, die bei ungefähr 1 GHz liegen kann, wird üblicherweise durch die verwendete differenzielle Fotodiode bestimmt.

In Figur 3A ist ein en face-Bild der menschlichen Netzhaut, aufgenommen mit der Vorrichtung gemäß der Figuren 1 und 2 bei einer Wiederholrate von 800 kHz und bei einer Wellenlänge von 1060 nm, dargestellt. Bei der Aufnahme gemäß Figur 3A ist ein Weglängenunterschied zwischen der Sekundärstrahlung S und der Referenzstrahlung R kleiner als eine Kohärenzlänge der Primärstrahlung P. Die Kohärenzlänge liegt hierbei im Bereich einiger Zentimeter.

In Figur 3B ist als Demonstration ein en face-Bild einer Platine dargestellt, aufgenommen mit einem Weglängenunterschied zwischen der Sekundärstrahlung S und der Referenzstrahlung R von zirka 2,6 m und somit weit außerhalb der Kohärenzlänge. Die Aufnahme erfolgte ebenfalls mit einer Vorrichtung 100 gemäß der Figuren 1 und 2. Insbesondere aufgrund von Heterodyn-Verstärkung im Interferometer der Sekundärstrahlung S mit zumindest teilweise kohärenter Strahlung aus der Lichtquelle 1 ist das en face-Bild mit einer herkömmlichen InGaAs-Fotodiode aufnehmbar. Es ist hierbei möglich, dass die Kohärenzlänge der Primärstrahlung P zur Aufnahme des Bildes gemäß Figur 3B gezielt verändert wird, um mehr Phasensprünge in der Primärstrahlung P zu erzielen und somit eine Restkohärenz mit der Sekundärstrahlung S zu erhöhen oder allgemein die Signalqualität zu verbessern.

Um einen großen Dynamikbereich in dem Radiofrequenz-Leistungsdetektor 44 und somit viele Graustufen in dem en face-Bild zu erhalten, ist es möglich, vor der Digitalisierung das Detektionssignal mit einer nicht linearen Funktion zu komprimieren, bevorzugt zu logarithmieren. Von dem AD8318 wird eine Logarithmierung des Signals bereits durchgeführt.

Aufgrund von eventuell unterschiedlicher Rückstreuung von Bildpunkt zu Bildpunkt des en face-Bildes oder aufgrund eines Signaluntergrunds, englisch Background, ist es bevorzugt, dass Frequenzanteile unterhalb einer Abstimmrate der Lichtquelle bei der Bestimmung des Radiofrequenz-Leistungsanteils nicht berücksichtigt werden. Die erforderliche Bandbreite lässt sich insbesondere bei dem AD83138 über einen Kondensator einstellen. Wenn die Lichtquelle 1 für verschiedene Wiederholraten vorgesehen ist, zum Beispiel für 250 kHz und für 800 kHz, so bietet es sich an, eine Abschneidefrequenz auf den höchsten benötigten Wert fest einzustellen. Alternativ hierzu kann die Abschneidefrequenz je nach Wiederholrate variabel einstellbar sein. Um bei kleineren Wiederholraten der Lichtquelle 1 gute Ergebnisse zu erhalten, ist es möglich, das Signal numerisch auf geringere Bandbreiten herunter zu rechnen, beispielsweise mittels eines FIR-Filters oder durch einfache Mittelwertbildung und/oder Addition.

Die Abtastung von Werten in dem vergleichsweise langsamen ADC 85b erfolgt bevorzugt synchron zu der Wiederholrate der Lichtquelle 1 und beträgt bevorzugt ein ganzzahliges Vielfaches der Wiederholrate. Hierzu kann z. B. eine optische k-Clock verwendet werden.

Bevorzugt erfolgt eine Synchronisation zwischen der Lichtquelle 1, Scannern der Optik 3 und dem ADC 85b in dem Radiofrequenz-Leistungsdetektor 44. Hierdurch ist sicherstellbar, dass die abgetasteten Leistungswerte zu dem entsprechenden Abstimmintervall der Lichtquelle 1 und zu dem entsprechenden Bildpunkt, angesteuert durch den Scanner, gehören. Weist zum Beispiel die Lichtquelle 1 eine Abstimmrate von 50 kHz auf, so erfolgt eine Wellenlängenabstimmung über eine Zeitdauer von zirka 10 µs hinweg, gefolgt von einer Rückabstimmung über 10 µs hinweg, wobei die Rückabstimmung beispielsweise nicht verwendet wird. Der ADC 85b in dem Leistungsdetektor 44 läuft beispielsweise mit einer Sample-Rate von 5 MHz. Es entstehen also 100 Datenpunkte pro Bildpunkt. Von diesen Datenpunkten werden nur die 50 verwendet, die zu der benutzten Abstimmrichtung gehören, die 50 Datenpunkte der Rückabstimmung werden verworfen.

Es ist möglich, dass die Spannungswerte am Ausgang des Leistungsdetektorelements 84 und/oder des Tiefpasses 83 auch in dem schnelleren ADC 85a abgetastet werden. Der vergleichsweise langsame ADC 85b kann dann entfallen. Insbesondere bei bereits logarithmierten Werten des Signals aus dem Strahlungsdetektor 42 können hierfür 8 Bit des schnellen ADC 85a ausreichen. Durch ein so genanntes Oversampling und/oder durch Mittlung aufeinanderfolgender Datenpunkte kann die Auflösung optional um beispielsweise 2 Bit oder beispielsweise 4 Bit gesteigert werden. In diesem Fall ist allerdings eine gleichzeitige Detektion des en face-Bildes und des dreidimensionalen Bildes der Probe nicht mehr möglich, da ein Eingang des schnellen ADC 85a wahlweise auf das Leistungsdetektorelement 84 oder auf den Ausgang des Strahlungsdetektors 42 geschaltet wird.

Weiterhin ist eine Nutzung des schnellen ADC 85a in einem Zeit-Multiplex-Verfahren möglich. Zum Beispiel kann der gesamte Datensatz für das dreidimensionale Bild der Probe 2 in dem en face-Modus aufgezeichnet werden, bis auf wenige Bereiche etwa in der Bildmitte, die zusätzlich als OCT-Tiefenschnitte präsentiert werden können, auch über mehrere Abstimmraten oder so genannte Frames hinweg als gemitteltes Bild. Die fehlenden insbesondere Zeilen in dem en face-Bild, die für die dreidimensionalen OCT-Daten verwendet werden, fallen in dem en face-Bild kaum auf oder können mit vergleichsweise geringem Rechenaufwand, aufgrund der erheblich geringen Anzahl von Datenpunkten, aus den OCT-Daten der Tiefenschnitte berechnet werden.

Verbesserte Detektionseigenschaften können sich ergeben, wenn eine optoelektronische Detektionsbandbreite größer als eine instantane Linienbreite der Lichtquelle 1 wird.

Soll nicht eine Rückstreuintensität von der Probe gemessen werden, so kann das Verfahren auch einfallendes Licht von einer zu untersuchenden, unabhängigen Quelle verwenden, um daran beispielsweise Bild gebende Spektroskopie durchzuführen, insbesondere sensitive hyperspektrale Bildgebung.

Anders als in Figur 1 dargestellt, ist es möglich, dass der Radiofrequenz-Leistungsdetektor 44 digital implementiert ist und nicht analog. Dies ist jedoch keine Ausführungsform der vorliegenden Erfindung. Hierzu werden die Daten aus dem vergleichsweise schnellen ADC 85a zunächst in eine programmierbare Logik, kurz FPGA, oder in einen anwendungsspezifischen integrierten Schaltkreis, kurz ASIC, geleitet, sofern der ADC 85a nicht bereits in entsprechende Bauteile integriert und/oder implementiert ist. Alternativ ist es möglich, dass der digital arbeitende Leistungsdetektor als Programm in einem Computer implementiert ist. Alternativ ist es möglich, dass der Leistungsdetektor auf der Grafikkarte (GPU) implementiert wird. Allgemein kann auch ein digitaler Signalprozessor (DSP) verwendet werden. Zur Hochfrequenz-Leistungsbestimmung aus dem Datenstrom des schnell arbeitenden ADC 85a ist in diesem Fall dann jedoch keine rechenaufwändige Fourier-Transformation erforderlich, sondern beispielsweise lediglich die Ermittlung eines RMS-Wertes. Ein solcher digital arbeitender Radiofrequenz-Leistungsdetektor kann auch in allen anderen Ausführungsbeispielen anstelle des oder zusätzlich zum analog arbeitenden Radiofrequenz-Leistungsdetektor vorhanden sein. Durch einen digital arbeitenden Leistungsdetektor sind eine Background-Subtraktion und/oder ein FIR-Filter, die sich einfach anpassen lassen, effizient realisierbar.

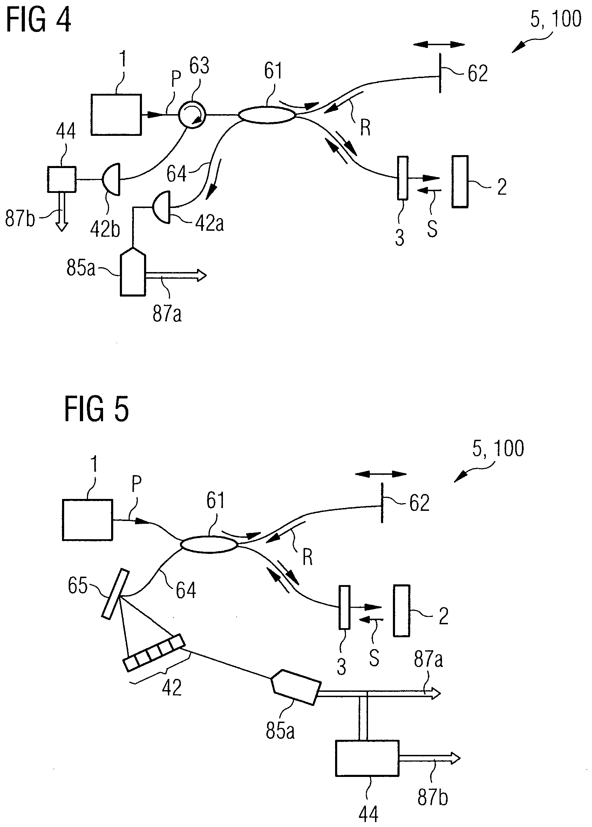

Beim Ausführungsbeispiel gemäß Figur 4 umfasst die Vorrichtung 100 zum Erstellen des en face-Bildes einen Aufbau 5 zur zeitkodierten optischen Kohärenz-Tomografie in der Frequenzdomäne. Nach dem Strahlteiler 61, in eine Richtung weg von der Probe 2, befindet sich der Strahlungsdetektor 42b, der sich somit an einem offenen Arm des Interferometers des Aufbaus 5 befindet, verbunden mit dem Interferometer über den optischen Zirkulator 63. Bei dem Strahlungsdetektor 42b kann es sich um eine herkömmliche Fotodiode oder auch um eine Lawinen-Fotodiode handeln. Der Radiofrequenz-Leistungsdetektor 44 kann analog, etwa wie in Figur 1 angegeben, oder auch digital implementiert sein.

Beim Ausführungsbeispiel gemäß Figur 5 ist der Aufbau 5 zur spektral kodierten optischen Kohärenz-Tomografie in der Frequenzdomäne eingerichtet. Bei dem Strahlungsdetektor 42, der sowohl von dem Aufbau 5 zur OCT als auch von der Detektionseinheit 4 und dem Radiofrequenz-Leistungsdetektor 44 benutzt wird, handelt es sich beispielsweise um eine CCD-Kamera oder um eine Fotodiodenzeile. Gemäß Figur 5 ist dann das Interferenzmuster nicht in der Zeitdomäne kodiert, sondern räumlich und über die Wellenlänge. Die Darstellung über Wellenlängen aus der spektralen Kodierung ist äquivalent zur Darstellung der zeitkodierten Spektralanalyse. Der Radiofrequenz-Leistungsdetektor 44 arbeitet hierbei bevorzugt digital. Optionale Komponenten, wie ein zusätzlicher oder im gleichen Bauteil integrierter Hochpassfilter und Vorrichtungen zur Subtraktion eines optischen Untergrunds, die in allen Ausführungsbeispielen vorhanden sein können, sind nicht separat dargestellt.

Wie auch beim Ausführungsbeispiel gemäß Figur 1 sind zur effizienten Darstellung des en face-Bildes der Probe 2 zu dem Aufbau 5 zur OCT nur wenige und vergleichsweise preiswerte Komponenten erforderlich, insbesondere der Strahlungsdetektor 42 ist sowohl für die Generierung des dreidimensionalen OCT-Bildes als auch zur Erzeugung des en face-Bildes nutzbar, ebenso wie die Lichtquelle 1.

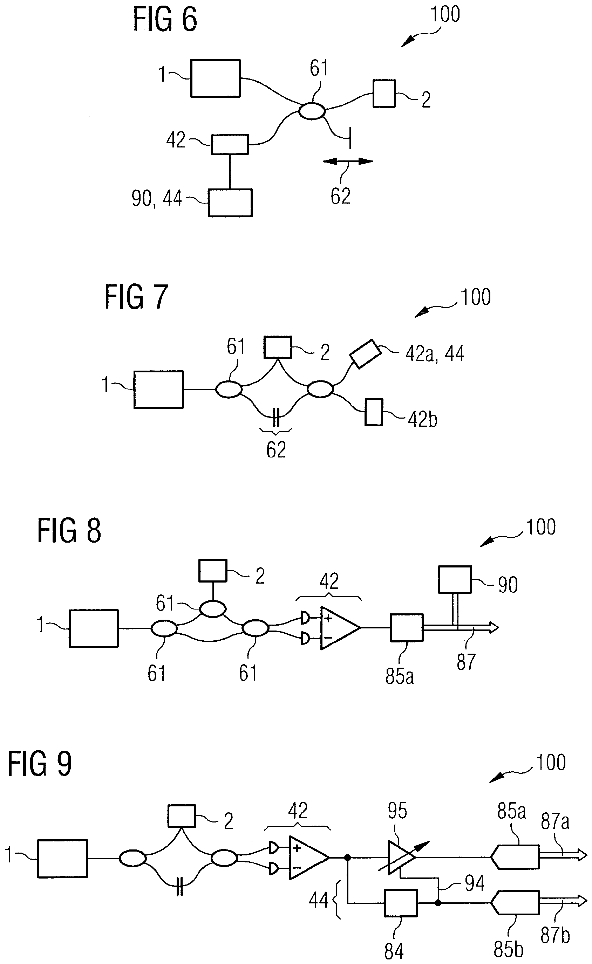

Beim Ausführungsbeispiel gemäß Figur 6 ist der Strahlungsdetektor 42 durch ein Spektrometer und/oder durch eine Kamera realisiert. Das Interferenzsignal wird räumlich wellenlängenaufgelöst detektiert. Der Leistungsdetektor 44 ist als Computerprogramm in einem Rechner 90 implementiert und arbeitet digital. Alternativ wäre zur Durchführung der beschriebenen Operationen auch geeignet, integriert oder separat: ein ASIC (application specific integrated circuit), ein FPGA (field programmable gate array), ein DSP (digitaler Signalprozessor), oder eine GPU (graphic processing unit - Grafikkarte eines Computers).

Gemäß Figur 7 ist der Strahlungsdetektor 42a insbesondere durch eine Lawinenphotodiode, englisch Avalanche diode, gebildet. Aus dem Signal des Strahlungsdetektors 42a werden dann die Helligkeitswerte für das en face-Bild ermittelt. Der Leistungsdetektor 44 kann hierbei digital oder analog arbeiten. Für die Datenaufnahme für das dreidimensionale Bild dient der separate Strahlungsdetektor 42b.

In Figur 8 wird das Signal des insbesondere differentiellen Strahlungsdetektors 42 in dem schnell arbeitenden ADC 85a digitalisiert. Dieses digitalisierte Signal wird dann in dem Rechner 90 mit Hilfe des digital arbeitenden Leistungsdetektors 44 zu dem en face-Bild verarbeitet. Das gleiche digitalisierte Signal dient auch zur Erzeugung des dreidimensionalen Bildes der Probe 2.
In Figur 9 ist ein Ausführungsbeispiel der Vorrichtung 100 gezeigt, bei dem ein Signal 94 des Leistungsdetektorelements 84 dazu verwendet wird, einen Verstärkungsfaktor eines variablen Verstärkers 95 anzusteuern. Der Verstärkungsfaktor kann bevorzugt mit detektiert werden.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Verfahren zur Reduktion der Dimensionalität eines von den optischen Eigenschaften einer Probe (2) abgeleiteten räumlich registrierten Signals mit den Schritten:
- Bereitstellen einer wellenlängenabstimmbaren Lichtquelle (1), die eine Primärstrahlung (P) mit sich zeitlich ändernder Wellenlänge emittiert,
- Abtasten von Ortspunkten der Probe (2) mit der Primärstrahlung (P),
- Sammeln einer Sekundärstrahlung (S), wobei die Sekundärstrahlung (S) ein von der Probe (2) zurückgeworfener Teil der Primärstrahlung (P) ist,
- Erzeugen eines interferometerbasierten Detektionssignals für eine Vielzahl von Probengebieten mit je mindestens einem Ortspunkt mit einer Detektionseinheit (4), wobei das Detektionssignal als Differenzsignal von zwei Ausgangssignalen eines Strahlteilers (61) erzeugt wird, der an zwei Eingängen Referenzstrahlung (R) bzw. Sekundärstrahlung (S) empfängt, wobei die Referenzstrahlung (R) ein Anteil der Primärstrahlung (P) ist, der nicht zu der Probe (2) geleitet wird, wobei Tiefeninformation der Probe (2) in der Frequenz des Detektionssignals codiert ist, und
- Bestimmen eines Helligkeitswerts für mindestens eines der Probengebiete aus dem zugehörigen Detektionssignal, **dadurch gekennzeichnet, dass**
der Helligkeitswert aus einem Radiofrequenzleistungsanteil des Detektionssignals für das einzelne Probengebiet bestimmt wird, wobei der Radiofrequenzleistungsanteil mithilfe eines Radiofrequenzleistungsdetektors in einer Analog-Messung bestimmt wird,
wobei der Radiofrequenzleistungsanteil in einem Frequenzbereich von einschließlich 3 kHz bis 30 GHz, oder in mindestens einem Frequenzteilbereich hieraus, bestimmt wird, sodass in die Bestimmung des Helligkeitswerts eine tiefenaufgelöste Information mit einer axialen Auflösung von schlechter 20 µm eingeht.

2. Verfahren nach Anspruch 1, wobei die Detektionseinheit (4) vorzugsweise einen oder mehrere Strahlungsdetektoren (42) für die Sekundärstrahlung (S) zum Erzeugen des Detektionssignals umfasst.

3. Verfahren nach einem der vorhergehenden Ansprüche,
bei dem die Lichtquelle (1) mit einer Wiederholrate von mindestens 3 kHz periodisch abgestimmt wird und sich eine Wellenlänge der Primärstrahlung (P) mit der Wiederholrate periodisch ändert,
wobei Frequenzen unterhalb einem 10-tel der Wiederholrate bei der Bestimmung der Helligkeitswerte unterdrückt werden oder unberücksichtigt bleiben.

4. Verfahren nach einem der vorhergehenden Ansprüche,
wobei mindestens bei einem Teil der Probenorte ein Weglängenunterschied zwischen der Sekundärstrahlung (S) und der Referenzstrahlung (R) größer ist als eine maximale Kohärenzlänge der Primärstrahlung (P) im bestimmungsgemäßen Betrieb der Lichtquelle (1).

5. Verfahren nach einem der vorhergehenden Ansprüche,
bei dem das Detektionssignal zum Erstellen eines dreidimensionalen Bildes der Probe (2) abgegriffen wird,
wobei zum Erstellen des dreidimensionalen Bildes das Detektionssignal eines jeden Bildpunktes einer Integraltransformation unterzogen wird, und/oder
bei dem ein Hauptbildeindruck des zweidimensionalen Bildes nicht oder nicht substantiell auf einer Operation und/oder Verarbeitung der dem dreidimensionalen Bild zugrunde liegenden Daten basiert, und/oder
bei dem der Hauptbildeindruck nicht substantiell auf einer trivialen Integraltransformation basiert.

6. Verfahren nach einem der vorhergehenden Ansprüche,
bei dem AC-Anteile der Stärke des Detektionssignals in einem spektral oszillatorischen Bereich bei Frequenzen von 2000 1/THz bis 0,02 1/THz zur Bestimmung der Helligkeitswerte mit eingehen, und/oder
bei dem die Referenzstrahlung (R) eines Interferometers während eines Messvorgangs der Sekundärstrahlung (S) vorübergehend um mindestens einen Faktor 10 abgeschwächt wird, wobei
die Lichtquelle (1) vorzugsweise während des Messvorgangs vorübergehend ihre Ausstrahlcharakteristik ändert.

7. Verfahren nach einem der vorhergehenden Ansprüche,
bei dem vor oder nach der Detektion der Sekundärstrahlung und/oder dem Erzeugen des interferometerbasierten Dektektionssignals ein digitaler und/oder analoger Filter verwendet wird, und/oder
bei dem vor oder nach der Detektion der Sekundärstrahlung und/oder dem Erzeugen des interferometerbasierten Dektektionssignals ein elektronischer, analoger Filter verwendet wird, und/oder
bei dem eine Kombination aus filternder Anordnung und digitaler Spektral-Detektion verwendet wird.

8. Verfahren nach einem der vorhergehenden Ansprüche,
bei dem vor oder nach der Detektion der Sekundärstrahlung und/oder dem Erzeugen des interferometerbasierten Dektektionssignals ein Filter mit zeitlich veränderlicher Transmissionscharakteristik verwendet wird,
wobei die Transmissionscharakteristik des Filters vorzugsweise synchron zur Abtastung geändert wird.

9. Verfahren nach einem der vorhergehenden Ansprüche,
bei dem die Bestimmung und/oder die graphische Darstellung der Helligkeitswerte die Subtraktion eines Signaluntergrunds beinhaltet, und/oder
bei dem bei der Bestimmung und/oder einer graphischen Darstellung der Helligkeitswerte eine nicht-lineare Skalierung verwendet wird.

10. Verfahren nach einem der vorhergehenden Ansprüche,
bei dem mindestens ein Helligkeitswert und/oder eine Signalstärke oder eine Intensität der Sekundärstrahlung (S) zur Steuerung eines elektronischen Verstärkens oder Abschwächens des Detektionssignals verwendet wird.

11. Verfahren nach einem der vorhergehenden Ansprüche,
bei dem mindestens ein Helligkeitswert und/oder eine Signalstärke oder eine Intensität der Sekundärstrahlung (S) zur Steuerung der optischen interferometrischen Verstärkung oder Abschwächung des Detektionssignals verwendet wird, und/oder
bei dem eine Signalstärke und/oder eine Intensität der Sekundärstrahlung (S) zur Steuerung der elektronischen Verstärkung des Detektionssignals verwendet wird,
wobei vorzugsweise die maximale oder die zeitlich gemittelte Signalstärke verwendet wird, oder
wobei vorzugsweise ein Verstärkungsfaktor synchron detektiert wird.

12. Vorrichtung (100) zum Erstellen eines zweidimensionalen Bildes einer dreidimensionalen Probe (2) mit:
- einer wellenlängenabstimmbaren Lichtquelle (1), die im Betrieb der Vorrichtung (100) eine Primärstrahlung (P) emittiert,
- einer Optik (3) zum Sammeln einer Sekundärstrahlung (S), wobei die Sekundärstrahlung (S) ein von einer Probe (2) zurückgeworfener Teil der Primärstrahlung (P) ist,
- einem Strahlteiler (61) mit zwei Eingängen zum Empfangen
• einer Referenzstahlung (R), die durch einen Anteil der Primärstrahlung (P) gebildet wird, der nicht zu der Probe (2) geleitet wird, und
• zumindest eines Teils der Sekundärstrahlung (S), und
zum Ausgeben zweier Interferenzsignale,
- einer Detektionseinheit (4) zum zeitlich wellenlängenaufgelösten Detektieren der Sekundärstrahlung (S), wobei die Detektionseinheit (4) einen Strahlungsdetektor (42) aufweist, der geeignet ist, ein Differenzsignal aus den beiden Interferenzsignalen als Detektionssignal zu erzeugen und einen analog arbeitenden Radiofrequenzleistungsdetektor oder Leistungsdetektor (44) umfasst, und wobei die Vorrichtung zur Durchführung eines Verfahrens nach einem der vorhergehenden Ansprüche eingerichtet ist.

13. Vorrichtung nach dem vorhergehenden Anspruch,
die einen Aufbau (5) zur zeitkodierten optischen Kohärenztomographie in der Frequenzdomäne umfasst,
wobei die Lichtquelle (1) mit einer Wiederholrate von mindestens 3 kHz wellenlängendurchstimmbar ist,
wobei der Strahlungsdetektor (42) von dem Aufbau (5) und der Detektionseinheit (4) gemeinsam genutzt sind, oder
die einen Aufbau (5) zur zeitkodierten optischen Kohärenztomographie in der Frequenzdomäne umfasst,
wobei die Lichtquelle (1) mit einer Wiederholrate von mindestens 3 kHz wellenlängendurchstimmbar ist,
wobei sich der Strahlungsdetektor (42) der Detektionseinheit (4) an einem offenen, nicht von dem Aufbau (5) genutzten Ende eines Interferometers des Aufbaus (5) befindet und der Strahlungsdetektor (42) unabhängig von dem Aufbau (5) ist.

14. Vorrichtung nach einem der Ansprüche 12 oder 13,
bei der die durch die Helligkeitswerte gewonnene Information zur automatischen oder manuellen Anpassung des abgerasterten Bereichs während, vor und nach einer Aufnahme verwendet wird, und/oder
bei der die durch die Helligkeitswerte gewonnene Information zum Ausrichten oder als Vorschaumodus verwendet wird, und/oder
bei der die durch die Helligkeitswerte gewonnene Information zum Anpassen einer Nullverzögerungslänge zwischen Referenz und Probenarm in einem OCT-Aufbau verwendet wird.

15. Vorrichtung nach einem der Ansprüche 12 bis 14,
bei der der Strahlungsdetektor (42) zwei Fotodioden umfasst, die zum Empfangen jeweils eines der Interferenzsignale geeignet sind, und/oder
bei der der Strahlungsdetektor (42) einen differentiellen Operationsverstärker umfasst.

## Claims

1. A method for reducing the dimensionality of a spatially registered signal derived from the optical properties of a sample (2), comprising the steps of:
- providing a wavelength-tunable light source (1) that emits primary radiation (P) with time-variant wavelength,
- sampling location points of the sample (2) with the primary radiation (P),
- collecting secondary radiation (S), wherein the secondary radiation (S) is a portion of the primary radiation (P) reflected by the sample (2),
- generating an interferometer-based detection signal for a plurality of sample areas that respectively contain at least one location point by means of a detection unit (4), wherein the detection signal is generated in the form of a differential signal between two output signals of a beam splitter (61) that respectively receives reference radiation (R) and secondary radiation (S) at two inputs, and wherein the reference radiation (R) is a portion of the primary radiation (P) that is not routed to the sample (2), wherein depth information of the sample (2) is coded in the frequency of the detection signal, and
- determining a brightness value for at least one of the sample areas from the associated detection signal, **characterized in that**
the brightness value is determined from a radiofrequency power component of the detection signal for the individual sample area, wherein the radiofrequency power component is determined using a radiofrequency power detector in an analog measurement,
wherein the radiofrequency power component is determined in a frequency range from and including 3 kHz to 30 GHz or in at least one frequency sub-range thereof, so that depth-resolved information with an axial resolution of less than 20 µm is used for the determination of the brightness value.

2. The method according to claim 1, wherein the detection unit (4) preferably comprises one or more radiation detectors (42) for the secondary radiation (S) in order to generate the detection signal.

3. The method according to one of the preceding claims,
in which the light source (1) is periodically tuned with a repetition rate of at least 3 kHz and the wavelength of the primary radiation (P) periodically changes with the repetition rate,
wherein frequencies below one-tenth of the repetition rate are suppressed or neglected in the determination of the brightness values.

4. The method according to one of the preceding claims,
wherein a path length differential between the secondary radiation (S) and the reference radiation (R) is during the intended operation of the light source (1) greater than a maximum coherence length of the primary radiation (P) in at least a portion of the sample locations.

5. The method according to one of the preceding claims,
in which the detection signal is tapped in order to generate a three-dimensional image of the sample (2),
wherein the detection signal of each image point is subjected to an integral transformation in order to generate the three-dimensional image, and/or
in which a principal impression made by the two-dimensional image is not or not substantially based on an operation and/or processing of the data that forms the basis of the three-dimensional image, and/or
in which the principal impression made by the image is not substantially based on a trivial integral transformation.

6. The method according to one of the preceding claims,
in which AC components of the strength of the detection signal in a spectrally oscillatory range with frequencies of 2000 1/THz to 0.02 1/THz are included in the determination of the brightness values, and/or
in which the reference radiation (R) of an interferometer is temporarily reduced by at least a factor of 10 during the measurement of the secondary radiation (S), wherein
the light source (1) preferably temporarily changes its emission characteristic during the measurement.

7. The method according to one of the preceding claims,
in which an electronic analog filter is used before or after the detection of the secondary radiation and/or the generation of the interferometer-based detection signal, and/or
in which a combination of a filtering arrangement and digital spectral detection is used.

8. The method according to one of the preceding claims,
in which a filter with time-variable transmission characteristic is used before or after the detection of the secondary radiation and/or the generation of the interferometer-based detection signal,
wherein the transmission characteristic of the filter preferably is varied synchronous with the sampling.

9. The method according to one of the preceding claims,
in which the determination and/or the graphic illustration of the brightness values includes the subtraction of a signal background, and/or
in which non-linear scaling is used in the determination and/or the graphic illustration of the brightness values.

10. The method according to one of the preceding claims,
in which at least one brightness value and/or a signal strength or an intensity of the secondary radiation (S) is used for controlling an electronic amplification or attenuation of the detection signal.

11. The method according to one of the preceding claims,
in which at least one brightness value and/or a signal strength or an intensity of the secondary radiation (S) is used for controlling the optical interferometric amplification or attenuation of the detection signal, and/or
in which a signal strength and/or an intensity of the secondary radiation (S) is used for controlling the electronic amplification of the detection signal,
wherein the maximum or the time-averaged signal strength is preferably used, or
wherein an amplification factor is preferably detected synchronously.

12. A device (100) for generating a two-dimensional image of a three-dimensional sample (2), comprising
- a wavelength-tunable light source (1) that emits primary radiation (P) during the operation of the device (100),
- an optical system (3) for collecting secondary radiation (S), wherein the secondary radiation (S) is a portion of the primary radiation (P) reflected by a sample (2),
- a beam splitter (61) with two inputs for receiving
• a reference radiation (R) consisting of a portion of the primary radiation (P) that is not routed to the sample (2) and
• at least a portion of the secondary radiation (S) and
for outputting two interference signals,
- a detection unit (4) for detecting the secondary radiation (S) wavelength-resolved in time, wherein the detection unit (4) comprises a radiation detector (42) that is suitable for generating a detection signal in the form of a differential signal between the two interference signals and comprises an analog radiofrequency power detector or power detector (44), and
wherein the device is designed for carrying out a method according to one of the preceding claims.

13. The device according to the preceding claim,
comprising a setup (5) for time-encoded optical coherence tomography in the frequency domain,
wherein the light source (1) can be wavelength-tuned with a repetition rate of at least 3 kHz, and
wherein the radiation detector (42) is jointly used by the setup (5) and the detection unit (4), or
comprising a setup (5) for time-encoded optical coherence tomography in the frequency domain,
wherein the light source (1) can be wavelength-tuned with a repetition rate of at least 3 kHz, and
wherein the radiation detector (42) of the detection unit (4) is located on an open end of an interferometer of the setup (5) that is not used by the setup (5) and the radiation detector (42) is independent of the setup (5).

14. The device according to one of Claims 12 or 13,
in which the information obtained by means of the brightness values is used for automatically or manually adapting the scanned region during, before and after an image is recorded, and/or
in which the information obtained by means of the brightness values is used for alignment purposes or as a preview mode, and/or
in which the information obtained by means of the brightness values is used for adapting a zero-delay length between a reference arm and a sample arm in an OCT setup.

15. The device according to one of Claims 12 to 14,
in which the radiation detector (42) comprises two photodiodes that are suitable for respectively receiving one of the interference signals, and/or
in which the radiation detector (42) comprises a differential operational amplifier.

## Revendications

1. Procédé pour la réduction de la dimensionnalité d'un signal enregistré spatialement dérivé des propriétés optiques d'un échantillon (2), avec les étapes suivantes :
- mise à disposition d'une source de lumière (1) accordable en longueur d'onde, qui émet un rayonnement primaire (P) avec une longueur d'onde variant dans le temps,
- balayage de points locaux de l'échantillon (2) avec le rayonnement primaire (P),
- collecte d'un rayonnement secondaire (S), le rayonnement secondaire (S) étant une partie du rayonnement primaire (P) réfléchie par l'échantillon (2),
- génération d'un signal de détection basé sur un interféromètre pour une pluralité de zones de l'échantillon avec chacune un point local avec une unité de détection (4), le signal de détection étant généré sous la forme d'un signal différentiel de deux signaux de sortie d'un diviseur de faisceau (61), qui reçoit, au niveau deux entrées, respectivement un rayonnement de référence (R) et un rayonnement secondaire (S), le rayonnement de référence (R) étant une partie du rayonnement primaire (P) qui n'est pas guidé vers l'échantillon (2), une information de profondeur de profondeur de l'échantillon (2) étant codée dans la fréquence du signal de détection et
- détermination d'une valeur de luminosité pour au moins une des zones de l'échantillon à partir du signal de détection correspondant, **caractérisé en ce que** la valeur de luminosité est déterminée à parti d'une partie de puissance de fréquence radio du signal de détection pour la zone d'échantillon individuelle, la partie de puissance de fréquence radio étant déterminée au moyen d'un détecteur de puissance de fréquence radio lors d'une mesure analogique,
la partie de puissance de fréquence radio étant déterminée dans une plage de fréquence de 3 kHz inclus à 30 GHz ou dans au moins une plage de fréquence partielle de celle-ci, de façon à ce que, pour la détermination de la valeur de luminosité, une information à résolution de profondeur avec une résolution axiale plus mauvaise que 20 µm est prise en compte.

2. Procédé selon la revendication 1, l'unité de détection (4) comprenant de préférence un ou plusieurs détecteurs de rayonnement (42) pour le rayonnement secondaire (S) pour la génération du signal de détection.

3. Procédé selon l'une des revendications précédentes,
dans lequel la source de lumière (1) est accordée périodiquement avec un taux de rafraîchissement d'au moins 3 kHz et une longueur d'onde du rayonnement primaire (P) varie périodiquement avec le taux de rafraîchissement,
les fréquences en dessous d'un 10^{e} du taux de rafraîchissement étant inhibées ou n'étant pas prises en compte lors de la détermination des valeurs de luminosité.

4. Procédé selon l'une des revendications précédentes,
moyennant quoi, au moins pour une partie des endroits de l'échantillon, une différence de longueur d'onde entre le rayonnement secondaire (S) et le rayonnement de référence (R) est supérieure à une longueur de cohérence maximale du rayonnement primaire (P) lors du fonctionnement correct de la source de lumière (1).

5. Procédé selon l'une des revendications précédentes,
dans lequel le signal de détection est prélevé pour la création d'une image tridimensionnelle de l'échantillon (2),
moyennant quoi pour la création de l'image tridimensionnelle, le signal de détection de chaque point d'image est soumis à une transformation intégrale et/ou
dans lequel une impression d'image principale de l'image bidimensionnelle n'est pas basée ou pas essentiellement basée sur une opération et/ou un traitement des données à la base de l'image tridimensionnelle et/ou
dans lequel l'impression d'image principale n'est pas essentiellement basée sur une transformation intégrale triviale.

6. Procédé selon l'une des revendications précédentes,
dans lequel les parties AC de l'intensité du signal de détection dans une plage spectrale oscillatoire à des fréquences de 2000 1/THz à 0,02 1/THz sont prises en compte pour la détermination des valeurs de luminosité et/ou
dans lequel le rayonnement de référence (R) d'un interféromètre est atténué provisoirement, pendant un processus de mesure du rayonnement secondaire (S), d'au moins un facteur 10, moyennant quoi
la source de lumière (1) modifiant, de préférence pendant le processus de mesure, provisoirement sa caractéristique d'émission.

7. Procédé selon l'une des revendications précédentes,
dans lequel, avant ou après la détection du rayonnement secondaire et/ou la génération du signal de détection basé sur un interféromètre, un filtre numérique et/ou analogique est utilisé et/ou
dans lequel, avant ou après la détection du rayonnement secondaire et/ou la génération du signal de détection basé sur un interféromètre, un filtre analogique électronique est utilisé et/ou
dans lequel une combinaison d'une configuration filtrante et d'une détection spectrale numérique est utilisée.

8. Procédé selon l'une des revendications précédentes,
dans lequel, avant ou après la détection du rayonnement secondaire et/ou la génération du signal de détection basé sur un interféromètre, un filtre avec une caractéristique de transmission variant dans le temps est utilisée,
la caractéristique de transmission du filtre variant de préférence de manière synchrone avec le balayage.

9. Procédé selon l'une des revendications précédentes,
dans lequel la détermination et/ou la représentation graphique des valeurs de luminosité contient la soustraction d'un bruit de fond du signal et/ou
dans lequel, lors de la détermination et/ou de la représentation graphique des valeurs de luminosité, une mise à l'échelle non linéaire est utilisée.

10. Procédé selon l'une des revendications précédentes,
dans lequel au moins une valeur de luminosité et/ou une intensité de signal ou une intensité du rayonnement secondaire (S) est utilisée pour le contrôle d'une amplification ou d'une atténuation électronique du signal de détection.

11. Procédé selon l'une des revendications précédentes,
dans lequel au moins une valeur de luminosité et/ou une intensité de signal ou une intensité du rayonnement secondaire (S) est utilisée pour le contrôle d'une amplification ou d'une atténuation optique interférométrique du signal de détection est utilisée et/ou
dans lequel une intensité de signal et/ou une intensité du rayonnement secondaire (S) est utilisée pour le contrôle de l'amplification électronique du signal de détection, de préférence l'intensité de signal maximale ou moyennée dans le temps étant utilisée, ou de préférence un facteur d'amplification étant détecté de manière synchrone.

12. Dispositif (100) pour la création d'une image bidimensionnelle d'un échantillon tridimensionnel (2) avec :
- une source de lumière (1) accordable en longueur d'onde, qui émet, lors du fonctionnement du dispositif (100), un rayonnement primaire (P),
- une optique (3) pour la collecte d'un rayonnement secondaire (S), le rayonnement secondaire (S) étant une partie du rayonnement primaire (P) réfléchie par un échantillon (2),
- un diviseur de faisceau (61) avec deux entrées pour la réception
• d'un rayonnement de référence (R) qui est constitué d'une partie du rayonnement primaire (P) qui n'est pas guidée vers l'échantillon (2) et
• d'au moins une partie du rayonnement secondaire (S) et
pour l'émission de deux signaux d'interférences,
- une unité de détection (4) pour la détection, à résolution temporelle des longueurs d'ondes, du rayonnement secondaire (S), l'unité de détection (4) comprenant un détecteur de rayonnement (42) qui est conçu pour générer un signal différentiel à partir des deux signaux d'interférences en tant que signal de détection et qui comprend un détecteur de puissance de fréquence radio ou un détecteur de puissance (44) et le dispositif étant conçu pour l'exécution d'un procédé selon l'une des revendications précédentes.

13. Dispositif selon la revendication précédente,
qui comprend une structure (5) pour la tomographie de cohérence codée dans le temps dans le domaine de fréquence,
la source de lumière (1) pouvant être accordée en longueur d'onde avec un taux de rafraîchissement d'au moins 3 kHz,
le détecteur de rayonnement (42) étant utilisé en commun par la structure (5) et par l'unité de détection (4) ou
qui comprend une structure (5) pour la tomographie de cohérence codée dans le temps dans le domaine de fréquence,
la source de lumière (1) pouvant être accordée en longueur d'onde avec un taux de rafraîchissement d'au moins 3 kHz,
le détecteur de rayonnement (42) de l'unité de détection (4) se trouvant au niveau d'une extrémité, non utilisée par la structure (5), d'un interféromètre de la structure (5) et le détecteur de rayonnement (42) étant indépendant de la structure (5).

14. Dispositif selon l'une des revendications 12 ou 13,
dans lequel l'information obtenue grâce aux valeurs de luminosité est utilisée pour l'adaptation automatique ou manuelle de la zone balayée pendant, avant et après une prise de vue et/ou
dans lequel l'information obtenue grâce aux valeurs de luminosité est utilisée pour l'orientation ou en tant que mode de prévisualisation et/ou
dans lequel l'information obtenue grâce aux valeurs de luminosité est utilisée pour l'adaptation d'une longueur de retard nul entre la référence et le bras l'échantillon dans une structure OCT.

15. Dispositif selon l'une des revendications 12 à 14,
dans lequel le détecteur de rayonnement (42) comprend deux photodiodes qui sont conçues pour la réception chacune d'un des signaux d'interférences et/ou
dans lequel le détecteur de rayonnement (42) comprend un amplificateur opérationnel différentiel.
